# EUROPÄISCHE PATENTANMELDUNG

(11) **EP 2 566 022 A1**
(43) Veröffentlichungstag der Anmeldung: **06.03.2013**
(21) Anmeldenummer: 11179197.6
(22) Anmeldetag: 29.08.2011
(51) Int. Cl.: H02M 1/12

(54) **Netzfiltervorrichtung, Umrichter und Verfahren zum Einstellen einer Netzfilterkapazität**

(71) Anmelder: Siemens Aktiengesellschaft, 80333 München (DE)
(72) Erfinder: Rebbereh, Carsten, 90768 Fürth (DE)

(57) **Zusammenfassung**

Werden zahlreiche leistungselektronische Geräte über dieselben Netzphasenleiter (16) an ein Energieversorgungsnetz angeschlossen und hierbei nur wenige dieser Geräte gleichzeitig betrieben, können sich die Blindströme von Netzfiltern der einzelnen Geräte zu erheblichen Gesamtblindströmen aufsummieren. Es ist Aufgabe der vorliegenden Erfindung, für ein leistungselektronisches Gerät (20) eine effiziente Filterung von Oberwellen in dessen Zuleitungen (16) zu ermöglichen. Bei der erfindungsgemäßen Netzfiltervorrichtung (22) ist eine erste Filterkondensatorschaltung (24) wahlweise über Netzanschlüsse (34) zum Anschließen der Netzfiltervorrichtung (22) an Netzphasenleiter (16) eines Energieversorgungsnetzes dem Energieversorgungsnetz zuschaltbar. Hierdurch sind in dann Spannungsverläufen von Netzwechselspannungen der Netzphasenleiter (16) Frequenzanteile oberhalb einer Netzgrundfrequenz dämpfbar. Zusätzlich ist wenigstens eine weitere, unabhängig von der ersten Filterkondensatorschaltung (24) dem Energieversorgungsnetz zuschaltbare Filterkondensatorschaltung (26) bereitgestellt. Die Erfindung betrifft auch einen Umrichter sowie ein Verfahren zum Einstellen einer Netzfilterkapazität eines Netzfilters für ein leistungselektronisches Gerät (20).

## Beschreibung

Die Erfindung betrifft eine Netzfiltervorrichtung für ein leistungselektronisches Gerät sowie einen Umrichter mit einer solchen Netzfiltervorrichtung und ein Verfahren zum Einstellen einer Netzfilterkapazität eines Netzfilters für ein leistungselektronisches Gerät.

Ein Netzfilter für ein leistungselektronisches Gerät kann eine Schaltung aus Filterkondensatoren enthalten. Die Filterkondensatoren sind dabei zu einer Filterschaltung verschaltet, wodurch in Spannungsverläufen von Wechselspannungen der Netzphasenleiter Oberwellen, d.h. Frequenzanteile oberhalb einer Netzgrundfrequenz, gedämpft werden. Dies verbessert die elektromagnetische Verträglichkeit (EMV) des elektronischen Geräts in dem Energieversorgungsnetz, über welches das Gerät mit elektrischer Energie versorgt wird. Insbesondere leistungselektronische Geräte, in welchen schnelle Schaltvorgänge (beispielsweise eine Pulsweitenmodulation) Spannungsspitzen in den Netzphasenleitern verursachen können, werden häufig zusammen mit einem Netzfilter betrieben. Dies trifft insbesondere auf leistungselektronische Geräte mit einer Nennleistung von über 10 kW, insbesondere über 50 kW, zu.

Ein Netzfilter ist oftmals entweder direkt an das Energieversorgungsnetz angeschlossen oder von diesem nur durch ein Hauptschütz abtrennbar, wodurch dann aber auch das Gerät selbst vom Netz getrennt wird. Während ein solches Gerät mit dem Energieversorgungsnetz gekoppelt ist, fließen daher in den Filterkondensatoren des Netzfilters Blindströme. Diese können insbesondere dann groß im Verhältnis zur Gesamtstromaufnahme werden, wenn das Gerät selbst nicht betrieben wird. Falls dabei beispielsweise in einer Werkshalle eines Unternehmens zahlreiche Geräte über dieselben Netzphasenleiter an das Energieversorgungsnetz angeschlossen sind und hierbei nur wenige dieser Geräte gleichzeitig betrieben werden, können sich die Blindströme der Netzfilter der einzelnen Geräte zu erheblichen Gesamtblindströmen aufsummieren, die unter Umständen sogar den Wert der zu diesem Zeitpunkt von den Geräten insgesamt benötigten Wirkleistung übersteigen.

Diese Blindströme verursachen eine Erwärmung der Netzphasenleiter. Zudem muss in der zentralen Energieeinspeisung des Unternehmens auch eine entsprechend hohe Scheinleistung, beispielsweise durch induktive Verbraucher oder Phasenschieber, bereitgestellt werden.

Aus der US 7,656,117 B2 ist eine Netzfiltervorrichtung mit einer Filterkondensatorschaltung bekannt, die über steuerbare Schaltelemente von den Netzphasenleitern eines Energieversorgungsnetzes getrennt werden kann. Die Filterkondensatorschaltung wird immer nur dann an die Netzphasenleiter zugeschaltet, wenn ein Umrichter zum Betreiben einer elektrischen Maschine eine Wirkleistung aus dem Energieversorgungsnetz benötigt.

Es ist Aufgabe der vorliegenden Erfindung, für ein leistungselektronisches Gerät eine effiziente Filterung von Oberwellen in dessen Zuleitungen zu ermöglichen.

Die Aufgabe wird durch eine Netzfiltervorrichtung gemäß Anspruch 1, einen Umrichter gemäß Anspruch 9 sowie ein Verfahren gemäß Anspruch 10 gelöst. Vorteilhafte Weiterbildungen der Erfindung sind durch die Unteransprüche gegeben.

Bei der erfindungsgemäßen Netzfiltervorrichtung kann eine erste Filterkondensatorschaltung dem Energieversorgungsnetz zugeschaltet werden. Die Netzfiltervorrichtung wird dazu über Netzanschlüsse an Netzphasenleiter des Energieversorgungsnetzes angeschlossen. Durch das Zuschalten ist die Filterkondensatorschaltung dann in dem Energieversorgungsnetz wirksam. Dann sind in Spannungsverläufen von Netzwechselspannungen der Netzphasenleiter Frequenzanteile oberhalb einer Netzgrundfrequenz dämpfbar. Das Zuschalten erfolgt hierbei wahlweise, d.h. es ist steuerbar und reversibel. So kann für den Fall, dass die Filterkondensatorschaltung nicht benötigt wird, ein Stromfluss in Filterkondensatoren der Schaltung blockiert werden.

Die erfindungsgemäße Netzfiltervorrichtung weist zusätzlich wenigstens eine weitere solche Filterkondensatorschaltung auf, die ebenfalls unabhängig von der ersten Filterkondensatorschaltung über Netzanschlüsse dem Energieversorgungsnetz zuschaltbar ist. Mit anderen Worten sind bei der erfindungsgemäßen Netzfiltervorrichtung wenigstens zwei Filterkondensatorschaltungen unabhängig voneinander dem Energieversorgungsnetz zuschaltbar. Hierdurch ergibt sich der Vorteil, dass sich die (am Energieversorgungsnetz wirksame) Netzfilterkapazität der Netzfiltervorrichtung eingestellt werden kann.

Nach dem erfindungsgemäßen Verfahren wird dazu ein Betriebszustand desjenigen Geräts ermittelt, das zusammen mit der Netzfiltervorrichtung an Netzphasenleitern betrieben wird und für welches die Netzwechselspannung gefiltert werden soll. In Abhängigkeit von dem ermittelten Betriebszustand wird dann die Netzfilterkapazität durch entsprechendes Zuschalten der zuschaltbaren Filterkondensatorschaltungen an die Netzphasenleiter eingestellt. Hierdurch kann die Netzfilterkapazität an den Wirkleistungsbedarf des Geräts angepasst werden. Die Netzfilterkapazität ist also immer nur gerade so groß, wie benötigt. Somit fließt kein unnötig großer Blindstrom. Durch die einstellbare Netzfilterkapazität können zudem in vorteilhafter Weise in einem Teillastbetrieb oder im Leerlauf des leistungselektronischen Geräts Resonanzen vermieden werden, die sich durch eine Wechselwirkung von Induktivitäten des Energieversorgungsnetzes und den Netzfilterkondensatoren des Netzfilters ergeben können.

Das erfindungsgemäße Verfahren sieht insbesondere vor, in dem Teillastbetrieb des Geräts, in welchem eine Leistungsaufnahme des Geräts kleiner als ein vorbestimmter Anteil einer Nennleistung des Geräts ist, nur eine erste Gruppe von Filterkondensatorschaltungen an die Netzphasenleiter zu schalten. Diese Gruppe kann dabei auch lediglich aus einer einzigen Filterkondensatorschaltung bestehen. Bei einer darüber hinausgehenden Leistungsaufnahme des Geräts wird dann zusätzlich eine zweite Gruppe von Filterkondensatorschaltungen an die Netzphasenleiter geschaltet. Natürlich ist hier auch ein Zu- und Abschalten von Filterkondensatorschaltungen an die Netzphasenleiter für mehrere Betriebslaststufen möglich.

Gemäß einer Ausführungsform der erfindungsgemäßen Netzfiltervorrichtung ist bei wenigstens einer der zuschaltbaren Filterkondensatorschaltungen durch deren Filterkondensatoren eine Sternschaltung gebildet. Hierdurch ergibt sich der Vorteil, dass kein zusätzlicher Neutralleiter bereitgestellt werden muss. Das Neutralleiterpotential ergibt sich von selbst im Sternpunkt der Schaltung.

Zum Zuschalten wenigstens einer der zuschaltbaren Filterkondensatorschaltungen weist die Netzfiltervorrichtung bevorzugt einen Leistungshalbleiterschalter auf. Diese können häufig geschaltet werden, ohne dabei mechanisch zu verschleißen. Besonders vorteilhaft erweisen sich hierbei Triacs, mit welchen Ströme bei Netzspannung (zum Beispiel mit einem Effektivwert von mehr als 200 V) bidirektional geschaltet werden können. Durch Verwendung eines Opto-Triacs ist in vorteilhafter Weise auch eine galvanische Trennung zwischen den Netzfilterkondensatoren und einer Steuerschaltung für die Halbleiterleistungsschalter ermöglicht.

Im Zusammenhang mit den Schaltern ist bei einer Ausführungsform der erfindungsgemäßen Netzfiltervorrichtung vorgesehen, dass bei wenigstens einer der zuschaltbaren Filterkondensatorschaltungen wenigstens ein Filterkondensator über ein steuerbares Schaltelement mit einem der Netzanschlüsse verschaltet ist. Hierdurch lässt sich der Filterkondensator dann vollständig vom Energieversorgungsnetze trennen.

Eine andere Ausführungsform sieht dagegen vor, dass bei wenigstens einer der zuschaltbaren Filterkondensatorschaltungen ein Filterkondensator über ein steuerbares Schaltelement mit einem Anschluss für ein Erd- oder ein Neutralleiterpotential verschaltet ist. Hierdurch kann ein Layout für Leitungen, über welche die Filterkondensatoren untereinander und mit den Netzanschlüssen verbunden sind, beim Entwickeln der Filterkondensatorschaltung einfacher entflochten werden können. Dadurch ergibt sich ein vereinfachter Aufbau der Filterkondensatorschaltung.

Eine andere vorteilhafte Weiterbildung der erfindungsgemäßen Netzfiltervorrichtung ergibt sich, wenn eine Messeinrichtung zum Ermitteln einer Stromstärke eines durch einen der Netzphasenleiter fließenden Wirkstroms bereitgestellt ist. Hierdurch ist dann eine tatsächliche von dem Gerät aufgenommene Wirkleistung ermittelbar, mit dem zusammen die Netzfiltervorrichtung betrieben werden soll. Die Netzfilterkapazität kann somit jederzeit in optimaler Weise an den tatsächlichen Betriebszustand des Geräts angepasst werden.

Eine andere vorteilhafte Weiterbildung sieht vor, einen Steueranschluss zum Empfangen eines Steuersignals vorzusehen. Hierbei ist dann eine Steuereinrichtung bereitgestellt, die dazu ausgelegt ist, in Abhängigkeit von dem empfangenen Steuersignal steuerbare Schaltelemente der Filterkondensatorschaltungen anzusteuern. Über den Steueranschluss lassen sich somit die einzelnen Filterkondensatorschaltungen durch entsprechende Steuersignale von außerhalb der Netzfiltervorrichtung an das Energieversorgungsnetz zuschalten oder von diesem abkoppeln.

In diesem Zusammenhang sieht auch eine Weiterbildung des erfindungsgemäßen Verfahrens vor, ein Pulsfreigabesignal eines Wechselrichters zu überwachen. Wechselrichter sind leistungselektronische Geräte, die typischerweise Oberwellen in Netzphasenleitern verursachen. Ihr Pulsfreigabesignal ist ein zuverlässiger Indikator für einen Filterungsbedarf in den Netzphasenleitern.

Der Steueranschluss ist in einer anderen vorteilhaften Ausgestaltung der Netzfiltervorrichtung dazu ausgelegt, die Netze der Schaltung mit einem Feldbus zu koppeln. Hierdurch ergibt sich der Vorteil, dass auch Informationen über einen zukünftigen Betrieb des Geräts, insbesondere eines zukünftigen Leistungsbedarfs, in der Netzfiltervorrichtung verfügbar gemacht werden können. Beispielsweise können hierzu über den Feldbus Informationen empfangen und ausgewertet werden, die im Rahmen eines Betriebs von Geräten nach einem Smart-Energy-Konzept, beispielsweise dem ProfiEnergy-Konzept, betrieben werden.

Gemäß einer anderen vorteilhaften Weiterbildung der Netzfiltervorrichtung ist bei wenigstens einer der zuschaltbaren Filterkondensatorschaltungen ein Vorladeschaltungselement bereitgestellt, über welches ein in einen Filterkondensator fließender Vorladestrom geführt werden kann. Hierdurch ist dann eine Stromstärke des Vorladestroms unter einen vorgebbaren Wert drosselbar. Hierdurch werden Stromstöße vermieden, wie sie sich ansonsten beim Zuschalten eines vollständig entladenen Filterkondensators ergeben können.

Ein weiterer Aspekt der Erfindung betrifft einen Umrichter, bei welchem eine Netzfiltervorrichtung gemäß einer Ausführungsform der erfindungsgemäßen Netzfiltervorrichtung integriert ist. Mittels eines Umrichters lässt sich in vorteilhafter Weise ein Gleichspannungs-Zwischenkreis mit elektrischer Energie aus einem Energieversorgungsnetz speisen, die dann von einem oder mehreren Wechselrichtern zum Beispiel zum Betreiben von elektrischen Maschinen entnommen werden kann. Bei dem erfindungsgemäßen Umrichter ist nun dessen Netzfilterkapazität stufenweise einstellbar, so dass der erfindungsgemäße Umrichter keine unnötig große Blindleistung verbraucht.

Die Erfindung wird im Folgenden anhand von Ausführungsbeispielen näher erläutert. Dazu zeigt:
- FIG 1: eine schematische Darstellung von leistungselektronischen Modulen in einer Werkshalle, wobei jedes der leistungselektronischen Module ein Netzfilter gemäß einer Ausführungsform der erfindungsgemäßen Netzfiltervorrichtung aufweist,
- FIG 2: eine schematische Darstellung einer leistungselektronischen Anordnung mit einem Netzfilter gemäß einer Ausführungsform der erfindungsgemäßen Netzfiltervorrichtung, wobei sich die Anordnung im Leerlauf befindet,
- FIG 3: die Anordnung von FIG 2 in einem Teillastbetrieb,
- FIG 4: die Anordnung von FIG 2 in einem Volllastbetrieb,
- FIG 5: eine Filterkondensatorschaltung eines Netzfilters gemäß einer weiteren Ausführungsform der erfindungsgemäßen Netzfiltervorrichtung,
- FIG 6: eine Filterkondensatorschaltung eines weiteren Netzfilters gemäß einer anderen Ausführungsform der erfindungsgemäßen Netzfiltervorrichtung und
- FIG 7: eine Filterkondensatorschaltung mit Vorladewiderständen, die sich in einem Netzfilter gemäß einer weiteren Ausführungsform der erfindungsgemäßen Netzfiltervorrichtung befindet.

Die Beispiele stellen bevorzugte Ausführungsformen der Erfindung dar.

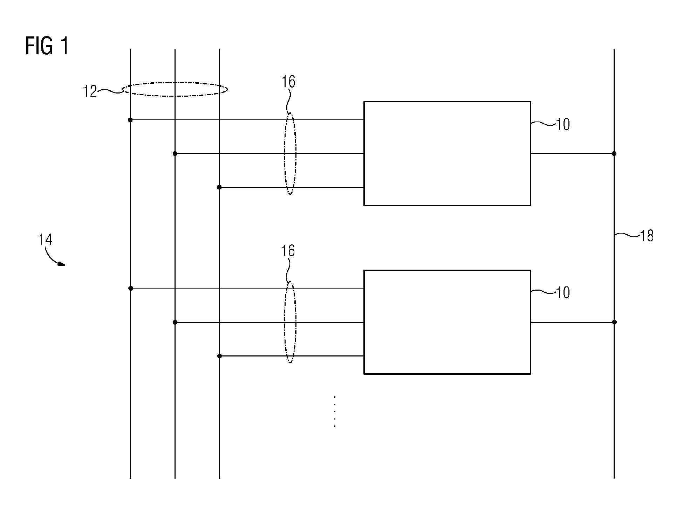

In dem FIG 1 zugrunde liegenden Beispiel sind in einer Werkshalle mehrere leistungselektronische Module 10 an Stromschienen 12 eines (dreiphasigen) Drehstrom-Energieversorgungsnetzes 14 über jeweilige Netzphasenleiter 16 des Energieversorgungsnetzes 14 angeschlossen. Zwischen den einzelnen Stromschienen 12 kann beispielsweise eine verkettete 50 Hz-Netzwechselspannung mit einem Effektivwert von 400 V anliegen.

Bei den leistungselektronischen Modulen 10 kann es sich beispielsweise um eine Anordnung aus einem Gleichrichter und mehrere mit diesem über einen Zwischenkreis gekoppelte Wechselrichter handeln. Über die Wechselrichter können dann zum Beispiel Elektromotoren einzelner Aktuatoren eines Fertigungsroboters betrieben werden. Die Wechselrichter werden dazu über einen Feldbus 18 gesteuert. Bei dem in FIG 1 gezeigten Beispiel kann es vorkommen, dass einzelne Elektromotoren im Minutentakt jeweils nur für einige Sekunden betrieben werden.

Bei jedem Modul 10 ist dem jeweiligen Umrichter ein Netzfilter vorgeschaltet. Diese bildet dabei ein EMV-Filter, das z.B. Spannungsspitzen dämpft, die über den Umrichter beim Betrieb der Wechselrichter aus dem Zwischenkreis in den Netzphasenleiter 16 übertragen werden.

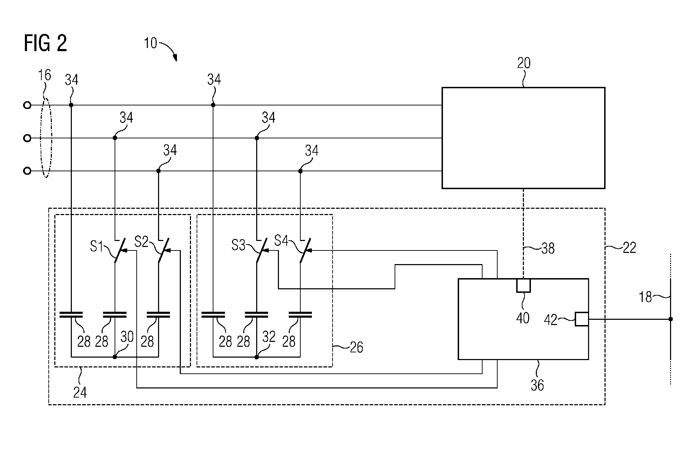

Im Folgenden ist anhand von FIG 2 bis FIG 4 exemplarisch an einem der Module 10 erläutert, wie die Netzfilterkapazität eines solchen Netzfilters in Abhängigkeit von einem elektrischen Leistungsbedarf des jeweiligen Moduls 10 eingestellt wird. Durch diese Anpassung der Netzfilterkapazität wird ein Blindstrombedarf der Module 10 minimiert, der über das Energieversorgungsnetz 14 gedeckt werden muss.

Bei dem in FIG 2 gezeigten Modul 10 sind der Umrichter, der Zwischenkreis und die daran angeschlossenen Wechselrichter insgesamt als eine leistungselektronische Anordnung 20 dargestellt. An die die Anordnung 20 mit den Stromschienen 12 der verbindenden Netzphasenleiter 16 ist ein Netzfilter 22 angeschlossen. Das Netzfilter 22 umfasst zwei Sternschaltungen 24, 26, die jeweils eine Filterkondensatorschaltung darstellen. Jede der Sternschaltungen 24, 26 umfasst drei Filterkondensatoren 28, die in einem Sternpunkt 30, 32 miteinander verschaltet sind. Jeder der Kondensatoren 28 ist über einen jeweiligen Netzanschluss 34 mit einem der Netzphasenleiter 16 gekoppelt. Jeweils zwei der Filterkondensatoren 28 jeder Sternschaltung 24, 26 ist dabei über einen Schalter S1, S2, S3, S4 in der in FIG 1 gezeigten Weise mit dem zugehörigen Netzanschluss 34 verschaltet.

Bei den Schaltern S1 bis S4 kann es sich um elektronische Schalter handeln. Sie werden von einer Steuereinheit 36 geschaltet. Die Steuereinheit 36 kann beispielsweise ein Mikrocontroller sein.

Die Steuereinheit 36 kann mit der Anordnung 20 über eine Signalleitung 38 gekoppelt sein. Hierzu kann die Steuereinheit 36 einen entsprechenden Steueranschluss 40 aufweisen. Über die Signalleitung 38 kann die Steuereinheit 36 dann zum Beispiel Pulsfreigabesignale einzelner Steuereinheiten der Wechselrichter der Anordnung 20 empfangen. Die Steuereinheit 36 kann hierdurch ermitteln, wie viel Wirkleistung von der Anordnung 20 zu einem bestimmten Zeitpunkt benötigt wird.

Die Steuereinheit 36 kann auch einen Netzbusanschluss 42 aufweisen, über welchen die dann mit dem Feldbus 18 gekoppelt sein kann. Über den Feldbus 18 kann die Steuereinheit 36 Informationen auch darüber empfangen, wann die einzelnen Wechselrichter der Anordnung 20 zu einem späteren Zeitpunkt aktiv sein werden.

In dem in FIG 1 gezeigten Zustand des Moduls 10 ist keiner der Wechselrichter aktiv. Dies wurde von der Steuereinheit 36 erkannt. Sie hat daraufhin Schalter S1 bis S4 geöffnet. Hierdurch sind Ströme aus den Netzphasenleitern 16 in die Filterkondensatoren 28 blockiert. Es kann somit auch kein Blindstrom zwischen den Netzphasenleitern 16 und den Filterkondensatorschaltungen 24 und 26 fließen. Damit nimmt das Netzfilter 22 keine Blindleistung auf.

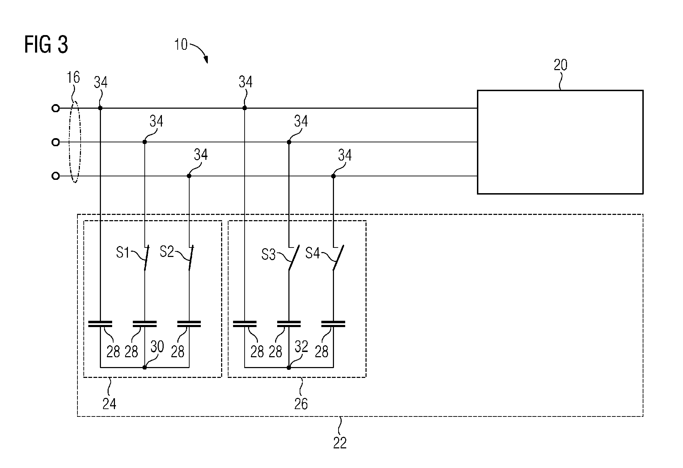

In FIG 3 ist eine Situation dargestellt, in welcher nur ein Teil der Wechselrichter Wirkleistung aus dem Energieversorgungsnetz über die Netzphasenleiter 16 empfangen. Insgesamt ergibt sich dadurch ein Teillastbetrieb der leistungselektronischen Anordnung 20, in welchem sie weniger als 50 % einer für die Anordnung 20 festgelegten Nennleistung verbraucht. Für diesen Teillastbetrieb wurden von der (in FIG 3 nicht noch einmal dargestellten) Steuereinheit 36 die Schalter S1 und S2 der Sternschaltung 24 geschlossen. Die Sternschaltung 24 ist somit dem Energieversorgungsnetz zugeschaltet. Hierdurch werden die Filterkondensatoren 28 der Sternschaltung 24 über die Anschlüsse 34 in den Netzphasenleitern 16 als Netzfilter wirksam, d.h. es fließen hochfrequente Anteile der Ströme der Netzphasenleiter 16 (mit einer Frequenz größer als 50 Hz) über die Kondensatoren 28 der Sternschaltung 24 zum Sternpunkt 30 ab, wo sie sich gegenseitig kompensieren.

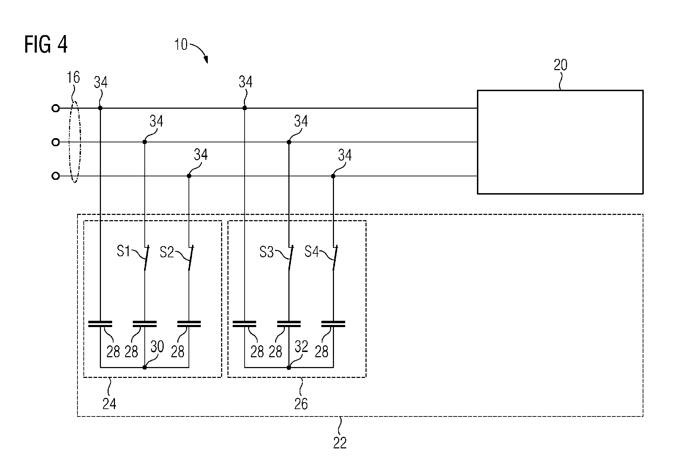

In FIG 4 ist eine Situation dargestellt, in welcher die Anordnung 20 im Volllastbetrieb eine elektrische Wirkleistung aufnimmt, die nahe der Nennleistung liegt (insbesondere also über 50% der Nennleistung). Um auch in diesem Volllastbetrieb die elektromagnetische Verträglichkeit der Anordnung 20 im Energieversorgungsnetz 14 zu gewährleisten, wurde durch die (in FIG 4 nicht dargestellte) Steuereinheit 36 die Netzfilterkapazität des Netzfilters 22 erhöht. Dazu wurden zusätzlich zu den Schaltern S1 und S2 auch die Schalter S3 und S4 geschlossen. Hierdurch ist auch die Sternschaltung 26 dem Energieversorgungsnetz zugeschaltet. Damit sind beide Sternschaltungen 24, 26 in einer Parallelschaltung mit den Netzphasenleitern 16 elektrisch verbunden.

Sobald ein Wirkleistungsbedarf der Anordnung 20 wieder unter 50 % der Nennleistung sinkt, werden durch die Steuereinheit 36 die Schalter S1 und S2 oder die Schalter S3 und S4 geöffnet. Im Leerlauf der Anordnung 20, d.h. wenn diese keine Wirkleistung oder nahezu keine Wirkleistung (< 5% der Nennleistung) aufnimmt, werden durch die Steuereinheit 36 sämtliche Schalter S1 bis S4 in einen geöffneten Zustand geschaltet.

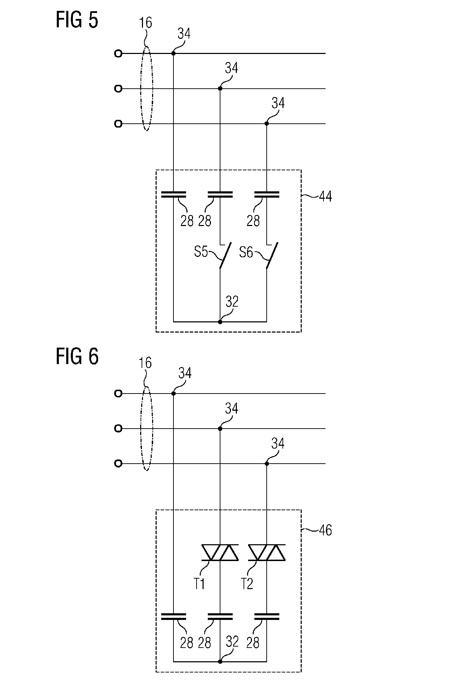

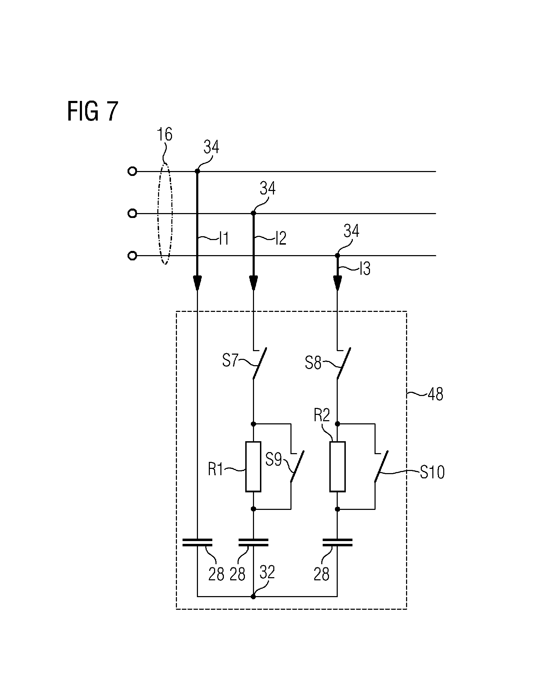

In FIG 5 ist eine Sternschaltung 44 gezeigt, welche als Filterkondensatorschaltung in einer Ausführungsform einer erfindungsgemäßen Netzfiltervorrichtung eingebaut ist. Die Netzfiltervorrichtungen weist weitere Filterkondensatorschaltungen auf, die in FIG 5 der Übersichtlichkeit halber aber nicht dargestellt sind. In FIG 5 (und ebenso in FIG 6 und FIG 7) sind Elemente, welche in ihrer Funktionsweise Elementen entsprechen, die in FIG 2 dargestellt sind, mit denselben Bezugszeichen versehen wie in FIG 2. Die Sternschaltung 44 ist über Netzanschlüsse 34 an Netzphasenleiter 16 angeschlossen. Ein Strom durch Filterkondensatoren 28 der Sternschaltung 44 kann mit Hilfe von Schaltern S5, S6 wahlweise blockiert werden. Die Schalter S5, S6 sind jeweils zwischen einen der Filterkondensatoren 28 und einen Sternpunkt 32 der Sternschaltung 44 geschaltet.

Bei den Schaltern S1 bis S6 handelt es sich bevorzugt um elektronische Schalter, insbesondere Triacs oder Opto-Triacs. In FIG 6 ist hierzu zur besseren Veranschaulichung eine Filterkondensatorschaltung 46 gezeigt, welche zwei Triacs T1, T2 als Schaltelemente zum wahlweisen Unterbrechen von elektrischen Kondensatorströmen aufweist, die zwischen Filterkondensatoren 28 und Netzphasenleitern 16 eines Energieversorgungsnetzes fließen. Eine Steuereinheit und Steuerleitungen, über welche die Steuereinheit mit den Triacs T1 und T2 verbunden ist und über welche sie die Triacs T1, T2 schaltet, sind in FIG 6 der Übersichtlichkeit halber nicht dargestellt.

In FIG 7 ist eine Filterkondensatorschaltung 48 gezeigt, die über Schalter S7, S8 wahlweise einem Energieversorgungsnetz mit Netzphasenleitern 16 zugeschaltet werden kann. Um Filterkondensatoren 28 der Filterkondensatorschaltung 48 mit Aufladeströmen I1, I2, I3 aufladen zu können, deren Stromstärke einen vorgegebenen Wert nicht überschreitet, können die Aufladeströme I1, I2, I3 hier über Vorladewiderstände R1, R2 geführt werden. Die Vorladewiderstände R1, R2 stellen jeweils ein Vorladeschaltungselement dar. Sobald die Filterkondensatoren 28 einen gewünschten Ladezustand erreicht haben, können die Vorladewiderstände R1, R2 durch Schließen von Schaltern S9, S10 überbrückt werden. Bei den Schaltern S7 bis S10 handelt es sich bevorzugt um elektronische Schalter, insbesondere Triacs.

Durch die Beispiele ist gezeigt, wie nach der erfindungsgemäßen Vorgehensweise zum Vermeiden eines unnötigen Verbrauchs von Blindleistung bei einem Gerät ein Netzfilter selbst abgeschaltet werden kann, wenn es nicht benötigt wird, sich also das betreffende Gerät zum Beispiel im Leerlauf befindet. Die möglichen Ausführungsformen können nach der Strategie für die Abschaltung der Filter sowie nach der Realisierung der Abschaltung unterschieden werden. Eine Abschaltstrategie besteht darin, eine automatische Ab- und Zuschaltung des gesamten Filters abhängig vom Ladezustand, zum Beispiel mit der Pulsfreigabe des Wechselrichters, vorzusehen. Die Zu- und Abschaltung des gesamten Filters kann auch abhängig von vorhandenen betrieblichen Informationen, d.h. wenn eine geplante Betriebspause ansteht, erfolgen. Zudem kann die Zu- und Abschaltung je nach tatsächlicher Belastung auch nur Teile des Netzfilters umfassen. Zum Beispiel ist eine Abschaltung der Hälfte der Filterkapazität bei Teillast (z.B. <50 % der Nennlast) denkbar. Dies ist sowohl automatisch als auch unter Verwendung von Wissen zur Betriebsführung möglich. Im Bezug auf die Realisierung kann entweder eine Trennung der Filterzweige vom Versorgungsnetz oder eine Auftrennung des Filters an einem internen Sternpunkt vorgesehen sein. Das Filter kann in das leistungselektronische Gerät integriert sein. Es kann aber auch als externe Filtereinheit bereitgestellt sein, im Falle einer externen Realisierung kann die Abschaltstrategie entweder autark auf Basis von gemessenen Wirkströmen in Richtung des leistungselektronischen Geräts erfolgen oder vom leistungselektronischen Gerät selbst getriggert werden. Letzteres kann wiederum auf Basis der oben beschriebenen Strategien zum Ein- und Ausschalten entschieden werden. In Bezug auf das Aufladen der Filterkondensatoren kann eine direkte Ab- und Zuschaltung der Netzfilterzweige oder alternativ (bei Bedarf) ein Einsatz einer Vorladeschaltung vorgesehen sein. Mittels der Vorladeschaltung können die Ströme beim Einschalten begrenzt werden. Aufgrund der erforderlichen häufigen Schaltvorgänge werden elektronische Schalter bevorzugt. Da sowohl Netzspannungen beherrscht werden müssen als auch Ströme in beiden Richtungen fließen können müssen, bieten sich als Schalter Triacs an. Durch ihre potenzialfreie Ansteuerung sind insbesondere Opto-Triacs vorteilhaft.

Der entscheidende Punkt ist die Abschaltung der kritischen Komponenten (d.h. der Filterkondensatorschaltungen) anstelle eines ganzen leistungselektronischen Moduls, wofür nämlich ein Hauptschütz geschaltet werden müsste. Das Abschalten der Filterkondensatorschaltungen erfolgt dabei bedarfsgesteuert. Vorteile sind eine Minimierung des Leerlaufstroms des Moduls, so dass insbesondere bei sehr kleinen Gleichzeitigkeitsfaktoren (d.h. wenn von einer Vielzahl parallel betriebener Module jeweils nur eine geringe Anzahl zugleich Wirkleistung benötigt) die bereitzustellende Scheinleistung der Anlage erheblich sinkt (und damit die Kosten gegenüber dem Energieversorger). Zusätzlich können auch die ohmschen Verluste in den Zuleitungen reduziert werden. Falls ein geringer Gleichzeitigkeitsfaktor stets gegeben ist, können zudem die Querschnitte der Zuleitungen verringert werden, was die Herstellung einer Anlage verbilligt. Gegenüber den heutigen Lösungen besteht der Vorteil, dass der Verschleiß von Vorladeschaltungen in Umrichtern und Zwischenkreisen vermieden wird, wie er durch die komplette netzseitige Trennung der Geräte auftreten würde. Gegenüber der Lösung mit induktiven Verbrauchern und Phasenschiebern sind deutlich geringere Kosten, ein erheblich kleinerer Bauraum sowie geringere Verluste zu nennen.

## Patentansprüche

1. Netzfiltervorrichtung (22) für ein leistungselektronisches Gerät (20), bei welchem eine erste Filterkondensatorschaltung (24,26,44,46,48) über Netzanschlüsse (34) zum Anschließen der Netzfiltervorrichtung (22) an Netzphasenleiter (16) eines Energieversorgungsnetzes (14) dem Energieversorgungsnetz (14) wahlweise zuschaltbar ist und hierdurch in Spannungsverläufen von Netzwechselspannungen der Netzphasenleiter (16) Frequenzanteile oberhalb einer Netzgrundfrequenz dämpfbar sind, **dadurch gekennzeichnet, dass** die Netzfiltervorrichtung (22) wenigstens eine weitere, unabhängig von der ersten Filterkondensatorschaltung (24,26,44,46, 48) wahlweise zuschaltbare Filterkondensatorschaltung (24, 26,44,46,48) aufweist.

2. Netzfiltervorrichtung (22) nach Anspruch 1, **dadurch gekennzeichnet, dass** bei wenigstens einer der zuschaltbaren Filterkondensatorschaltungen (24,26,44,46, 48) durch Filterkondensatoren (28) eine Sternschaltung (24,26,44,46,48) gebildet ist.

3. Netzfiltervorrichtung (22) nach Anspruch 1 oder 2, **dadurch gekennzeichnet , dass** zum Zuschalten wenigstens einer der zuschaltbaren Filterkondensatorschaltungen (24,26,44,46,48) ein Leistungshalbleiterschalter (S1 bis S10, T1,T2), insbesondere ein Triac (T1,T2), bevorzugt eine Opto-Triac, bereitgestellt ist.

4. Netzfiltervorrichtung (22) nach einem der vorhergehenden Ansprüche, **dadurch gekennzeichnet , dass** bei wenigstens einer der zuschaltbaren Filterkondensatorschaltungen (24,26,44,46,48) ein Filterkondensator (28) über ein steuerbares Schaltelement (S1 bis S4, S7 bis S10, T1,T2) mit einem der Netzanschlüsse (34) verschaltet ist.

5. Netzfiltervorrichtung (22) nach einem der vorhergehenden Ansprüche, **dadurch gekennzeichnet, dass** bei wenigstens einer der zuschaltbaren Filterkondensatorschaltungen (24,26,44,46,48) ein Filterkondensator (28) über ein steuerbares Schaltelement (S5,S6) mit einem Anschluss (32) für ein Erd- oder Neutralleiterpotential verschaltet ist.

6. Netzfiltervorrichtung (22) nach einem der vorhergehenden Ansprüche, **gekennzeichnet durch** eine Messeinrichtung zum Ermitteln einer Stromstärke eines **durch** einen der Netzphasenleiter fließenden Wirkstroms.

7. Netzfiltervorrichtung (22) nach einem der vorhergehenden Ansprüche, **gekennzeichnet durch** einen Steueranschluss (40,42) zum Empfangen eines Steuersignals sowie eine Steuereinrichtung (36), die dazu ausgelegt ist, in Abhängigkeit von dem empfangenen Steuersignal steuerbare Schaltelemente (S1 bis S10, T1,T2) der Filterkondensatorschaltungen (24,26,44,46,48) anzusteuern, wobei der Steueranschluss (42) bevorzugt dazu ausgelegt ist, die Netzfilterschaltung (22) mit einem Feldbus (18) zu koppeln.

8. Netzfiltervorrichtung (22) nach einem der vorhergehenden Ansprüche, **dadurch gekennzeichnet , dass** bei wenigstens einer der zuschaltbaren Filterkondensatorschaltungen (48) ein Vorladeschaltungselement (R1, R2) bereitgestellt ist, über welches ein in einen Filterkondensator (28) der Filterkondensatorschaltung (48) fließender Vorladestrom (12, 13) führbar ist und hierdurch eine Stromstärke des Vorladestroms (I2,I3) unter einen vorgebbaren Wert drosselbar ist.

9. Umrichter, bei welchem eine Netzfiltervorrichtung gemäß einem der vorhergehenden Ansprüche integriert ist.

10. Verfahren zum Einstellen einer Netzfilterkapazität eines Netzfilters (22) für ein leistungselektronisches Gerät (20), welches über Netzphasenleiter (16) eines Energieversorgungsnetzes (14) mit einer Netzwechselspannung versorgt wird, mit den Schritten:
- Bereitstellen einer Mehrzahl von dem Energieversorgungsnetz (14) an den Netzphasenleitern (16) zuschaltbaren Filterkondensatorschaltungen (24,26,44,46,48),
- Ermitteln eines Betriebszustands des Geräts (20),
- in Abhängigkeit von dem ermittelten Betriebszustand, Einstellen einer in dem Energieversorgungsnetz (14) wirksamen Netzfilterkapazität durch Zuschalten einer entsprechenden Anzahl von Filterkondensatorschaltungen (24,26,44,46,48).

11. Verfahren nach Anspruch 10, bei welchem in einem Teillastbetrieb des Geräts (20), in welchem eine Leistungsaufnahme des Geräts (20) kleiner als ein vorbestimmter Anteil, insbesondere weniger als 70%, bevorzugt weniger als 50%, einer Nennleistung des Geräts (20) beträgt, eine erste Gruppe von Filterkondensatorschaltungen (24,26,44,46,48) an die Netzphasenleiter (16) geschaltet wird und bei einer darüber hinausgehenden Leistungsaufnahme des Geräts (20) zusätzlich eine zweite Gruppe von Filterkondensatorschaltungen (24,26,44,46, 48) an die Netzphasenleiter (16) geschaltet wird.

12. Verfahren nach Anspruch 10 oder 11, bei welchem zum Ermitteln des Betriebszustands ein Pulsfreigabesignal eines Wechselrichters überwacht wird.

13. Verfahren nach einem der Ansprüche 10 bis 12, bei welchem ein zukünftiger Betriebszustand der Geräts ermittelt wird und hierzu über einen Feldbus (18) eine Information über einen zukünftigen Leistungsbedarf des Geräts (20) empfangen wird.
